(19) **Europäisches Patentamt European Patent Office Office européen des brevets**

(11) **EP 4 760 807 A1**

(12) **EUROPEAN PATENT APPLICATION**
published in accordance with Art. 153(4) EPC

(43) Date of publication:
**17.06.2026 Bulletin 2026/25**

(21) Application number: **24865854.4**

(22) Date of filing: **11.09.2024**

(51) International Patent Classification (IPC):
*H01M 4/36* (2006.01)          *H01M 4/525* (2010.01)
*C01G 53/00* (2025.01)        *H01M 10/052* (2010.01)
*H01M 4/02* (2006.01)

(52) Cooperative Patent Classification (CPC):
**C01G 53/00; H01M 4/02; H01M 4/36; H01M 4/525; H01M 10/052; Y02E 60/10**

(86) International application number:
**PCT/KR2024/013837**

(87) International publication number:
**WO 2025/058415 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023 KR 20230123472**
**10.09.2024 KR 20240123371**

(71) Applicant: **LG Energy Solution, Ltd.**
**Seoul 07335 (KR)**

(72) Inventors:
• **LHO, Eun Sol**
  **Daejeon 34122 (KR)**
• **HWANG, Jin Tae**
  **Daejeon 34122 (KR)**
• **KIM, Hyeong Il**
  **Daejeon 34122 (KR)**
• **OH, Su Yeon**
  **Daejeon 34122 (KR)**
• **LEE, Seok Jin**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL AND METHOD FOR PREPARING SAME**

(57)    The present invention relates to a positive electrode active material including a lithium transition metal oxide having a nickel content of 70 mol% or greater with respect to all metals excluding lithium, wherein EELS analysis results of a particle surface satisfy Equation 1.

FIG. 1

EP 4 760 807 A1

# EP 4 760 807 A1

**Description**

## TECHNICAL FIELD

This application claims the priority of Korean Patent Application Nos. 10-2023-0123472 filed on September 15, 2023 and 10-2024-0123371 filed on September 10, 2024, the disclosures of which are incorporated herein by reference.

The present invention relates to a positive electrode active material and a method for preparing the same, a positive electrode including the positive electrode active material, and a lithium secondary battery including the positive electrode.

## BACKGROUND ART

The rapid popularization of battery powered electronics such as mobile phones, notebook computers, and electric vehicles has brought with it a rapidly rising demand for small, lightweight, and relatively high-capacity secondary batteries lately. Lithium secondary batteries in particular are highlighted as a driving power source for portable electronics because the batteries are lightweight and have a high energy density. Accordingly, there have been extensive research and development efforts to improve the performance of lithium secondary batteries.

Lithium secondary batteries produce electric energy through an oxidation-reduction reaction occurring when lithium ions are intercalated/deintercalated into/from negative electrodes and positive electrodes, both of which are made of an active material enabling intercalation and deintercalation of lithium ions, in a state in which an organic electrolyte solution or a polymer electrolyte solution is filled between the negative electrodes and the positive electrodes.

Lithium cobalt oxide ($LiCoO_2$), lithium nickel oxide ($LiNiO_2$), lithium manganese oxide ($LiMnO_2$, $LiMnO_4$, or the like), lithium iron phosphate compound ($LiFePO_4$), and the like have been used as a positive electrode active material for lithium secondary batteries. In addition, as a method for retaining an excellent reversible capacity of $LiNiO_2$ and improving the low thermal stability thereof, a lithium composite metal oxide, in which a portion of nickel (Ni) is substituted with cobalt (Co) and manganese (Mn) (hereinafter, simply referred to as "NCM-based lithium composite transition metal oxide"), has been developed. However, a typical NCM-based lithium composition transition metal oxide that has been developed does not have sufficient capacity properties, and thus there has been a limitation in the application thereof.

In order to address such limitations, studies have been conducted lately to increase the content of Ni in an NCM-based lithium composite transition metal oxide. However, a high-nickel (high-Ni) positive electrode active material having a high nickel content generates a large amount of gas during charging/discharging due to the high reactivity of nickel, has significant instability of a lattice structure due to cation mixing and oxygen desorption, and causes an increase in an amount of lithium impurities remaining on a surface thereof.

The increase in the amount of lithium impurities may cause gelation and swelling of a positive electrode slurry, and thus the high-Ni positive electrode active material is typically washed in the preparation process. This washing process removes lithium by-products on the surface and thus provides the benefit of reducing gas generation, but may cause damage to surfaces of positive electrode active material particles, adversely affecting lifetime and storage.

## DISCLOSURE OF THE INVENTION

### TECHNICAL PROBLEM

In order to address the above-described tasks, in preparing a positive electrode active material having a high nickel content, an aspect of the present invention provides a method for effectively removing lithium by-products remaining on a surface without damaging a particle structure, and a positive electrode active material prepared using the method and exhibiting excellent resistance and lifetime characteristics.

### TECHNICAL SOLUTION

[1] The present invention provides a positive electrode active material including a lithium transition metal oxide having a nickel content of 70 mol% or greater with respect to all metals excluding lithium, wherein EELS analysis results of a particle surface of the positive electrode active material satisfy Equation 1 below.

[Equation 1]

$$0.85 \leq I(854\ eV)/I(855.5\ eV) < 1$$

In Equation 1 above,

I (854 eV) indicates a peak intensity observed around 854 eV, and
I (855.5 eV) indicates a peak intensity observed around 855.5 eV.

[2] The present invention provides the positive electrode active material of [1] above, wherein a molar ratio of lithium to all metal elements excluding lithium in the lithium transition metal oxide is 1.01 to 1.09.

[3] The present invention provides the positive electrode active material of [1] or [2] above, wherein the lithium transition metal oxide is represented by Formula 1 below:

[Formula 1]   $Li_aNi_bCo_cMn_dQ_eO_{2+f}$

wherein in Formula 1 above,
a, b, c, d, e, and f satisfy $1.03 \leq a \leq 1.09$, $0.7 \leq b < 1.0$, $0 < c < 0.3$, $0 < d < 0.3$, $0 \leq e \leq 0.1$, $b+c+d+e=1$, and $-0.1 \leq f \leq 1.0$, respectively, and
Q is at least one selected from the group consisting of Al, Mg, V, Ti, Zr, W, Cu, Fe, Cr, Zn, In, Ta, Y, La, Sr, Ga, Sc, Gd, Sm, Ca, Ce, Nb, Mg, B, and Mo.

[4] The present invention provides the positive electrode active material of at least one of [1] to [3] above, wherein the positive electrode active material has a $D_{50}$ of 8 $\mu$m to 15 $\mu$m.

[5] The present invention provides a method for preparing the positive electrode active material of at least one of [1] to [4] above, including:

mixing a precursor having a nickel content of 70 mol% or greater with respect to total moles of transition metal and a lithium source to form a mixture and firing the mixture to prepare a fired body, and
washing the fired body with a washing solution in an amount of 30 parts by weight to 70 parts by weight with respect to 100 parts by weight of the fired body to prepare a lithium transition metal oxide.

[6] The present invention provides the method of [5] above, wherein the preparing of the fired body involves mixing the precursor and the lithium source so that Li/M, which is a molar ratio of lithium in the lithium source to the total metal elements of the precursor, is 1.01 to 1.09.

[7] The present invention provides the method of [5] or [6] above, wherein the washing in the preparing of the lithium transition metal oxide is performed by placing the fired body in water and stirring the mixture at a temperature of 15 °C to 25 °C for 1 minute to 20 minutes at a rate of 1,500 rpm to 2,500 rpm.

[8] The present invention provides the method of at least one of [5] to [7] above, wherein the firing in the preparing of the fired body is performed at a temperature of 700 °C to 900 °C.

[9] The present invention provides a positive electrode including the positive electrode active material of at least one of [1] to [4] above.

[10] The present invention provides a lithium secondary battery including the positive electrode of [9] above, a negative electrode containing a negative electrode active material, a separator disposed between the positive electrode and the negative electrode, and an electrolyte.

## ADVANTAGEOUS EFFECTS

The present invention, in preparing a high-Ni positive electrode active material which requires a washing process, provides an optimal washing conditions for effectively removing lithium by-products remaining on a particle surface.

In addition, the present invention provides a positive electrode active material containing a high content of nickel, having low initial resistance and long life, and exhibiting low gas generation, and a method for preparing the same.

## BRIEF DESCRIPTION OF THE DRAWINGS

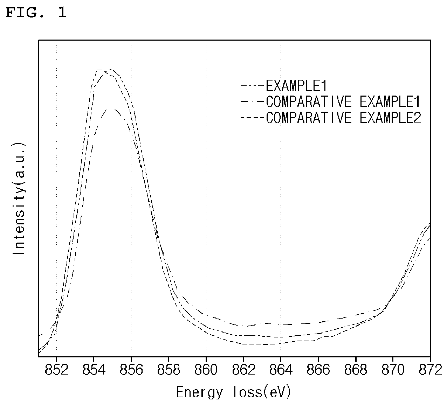

FIG. 1 is a view showing EELS spectra of surfaces of positive electrode active materials prepared in Example 1 and Comparative Examples 1 and 2 of the present invention.

## MODE FOR CARRYING OUT THE INVENTION

Hereinafter, the present invention will be described in detail to aid in understanding of the present invention.

The expression "result of EELS analysis" in the present invention indicates an EELS spectrum obtained through electron energy-loss spectroscopy (EELS). The EELS spectrum may be obtained using a high resolution-transmission electron microscope(HR-TEM), and in this case, a horizontal axis represents an energy-loss region, and a vertical axis represents a peak intensity.

In Equation 1 of the present invention, the expression "around 854 eV" indicates a region of $854 \pm 2.0$ eV, and the expression "around 855.5 eV" indicates a region of $855.5 \pm 2.0$ eV.

The expression "particle surface" in the present invention indicates a region within a distance of 100 nm from a surface of a particle in a central direction.

In the present invention, "$D_{50}$" indicates a particle diameter at 50% of the volume accumulation in volume accumulated particle size distribution of powder to be measured, and may be measured using a laser diffraction method. For example, the D50 may be measured in a way that the positive electrode active material powder is dispersed in a dispersion medium, the dispersion medium is introduced into a commercial laser diffraction particle size measurement instrument (e.g., Microtrac S-3500) and irradiated with ultrasonic waves having a frequency of about 28 kHz and an output of 60 W to obtain a volume accumulated particle size distribution graph, and the particle diameter at 50% of the volume accumulation in the obtained graph is calculated.

## Method for producing positive electrode active material

First, a method for preparing a positive electrode active material according to the present invention will be described.

A high-nickel (high Ni) positive electrode active material having a Ni content of 70 mol% or greater with respect to all metals excluding lithium is capable of achieving high capacity, but undergoes a lot of change in lattice constant, that is, a lot of change in volume of a unit lattice. This change in volume causes generation of cracks in an active material, and the cracks thus generated may cause generation of voids in the active material to degrade performance of a battery.

In addition, the high nickel content causes significant cation mixing of lithium ions and nickel ions, and this generates a large amount of lithium by-products remaining on the surface of positive electrode active material particles. These lithium by-products cause gelation of a positive electrode slurry and swelling of a battery, and also cause side reactions with an electrolyte to accelerate the decomposition of the electrolyte, resulting in reduced battery life.

Therefore, unlike typical positive electrode active materials having a nickel content of less than 70 mol%, the high Ni positive electrode active material having a nickel content of 70 mol% or greater, requires a washing process to remove lithium by-products on the particle surface in the preparation process. However, when the washing process is not properly controlled and goes to over-washing, surface deterioration in which both the lithium by-products on the surface and lithium forming a structure in the particles are lost may take place. When the surface deteriorates in this way, resistance may increase and lifetime and storage characteristics may deteriorate.

In contrast, when insufficient washing causes lithium by-products to remain on a surface, the residual lithium by-products may act as a resistor to cause an increase in initial resistance or accelerate electrolyte decomposition reaction, resulting in an increase in gas generation.

Accordingly, the present inventors intend to remove lithium by-products without surface deterioration through an appropriately controlled washing process by preparing a high Ni positive electrode active material through the steps which will be described later. In addition, the excessive generation of lithium by-products on the surface was prevented to promote the surface stability of the positive electrode active material, and it was determined that the lifetime and storage characteristics of a battery containing the positive electrode active material were improved.

Hereinafter, each step included in the method for preparing a positive electrode active material according to the present invention will be described.

## a) Preparing fired body

The method for preparing a positive electrode active material includes mixing a precursor a nickel content of 70 mol% or greater with respect to the total moles of transition metals and a lithium source and firing the mixture to prepare a fired body.

In this case, the precursor is a transition metal precursor, and for example may be a commercially available precursor, such as nickel-cobalt-manganese-based hydroxide, or may be prepared according to a method for preparing a precursor which is known in the art.

Specifically, the precursor may be a transition metal hydroxide containing nickel, cobalt, and manganese and a nickel content of 70 mol% or more with respect to the total moles of all transition metals. When the amount of nickel in the precursor satisfies the above range, high capacity may be achieved.

Specifically, the precursor may be represented by Formula 1-1 below.

$$[\text{Formula 1-1}] \qquad Ni_{b1}Co_{c1}Mn_{d1}Q_{e1}(OH)_2$$

In Formula 1-1 above,

bl, cl, dl, and el respectively satisfy $0.7 \leq b1 < 1.0$, $0 < c1 < 0.3$, $0 < d1 < 0.3$, $0 \leq e1 \leq 0.1$, and $b1+c1+d1+e1=1$, and
Q is at least one selected from the group consisting of Al, Mg, V, Ti, and Zr.

In an embodiment of the present invention, bl, cl, dl and el in Formula 1-1 above may satisfy $0.7 \leq b1 < 1.0$, $0 < c1 \leq 0.15$, $0 < d1 \leq 0.25$, and $0 \leq e1 \leq 0.05$, respectively, and may more preferably satisfy $0.7 \leq b1 < 1.0$, $0 < c1 \leq 0.1$, $0 < d1 \leq 0.2$, and $0 \leq e1 \leq 0.03$, respectively.

For example, the precursor may be prepared by adding an aqueous transition metal solution, an ammonium cation complex forming agent, and a basic compound into a reactor and stirring the added compounds to perform a coprecipitation reaction.

The aqueous transition metal solution may be prepared by dissolving a transition metal-containing raw material in a solvent such as water and may be prepared, for example, by dissolving a nickel-containing raw material, a cobalt-containing raw material, and a manganese-containing raw material in water. In addition, if necessary, the aqueous transition metal solution may further include the Q metal-containing raw material.

Meanwhile, the transition metal-containing raw material may be acetate, carbonate, nitrate, sulfate, halide, sulfide, or oxide of a transition metal.

Specifically, the nickel-containing raw material may be, for example, $NiO$, $NiCO_3 \cdot 2Ni(OH)_2 \cdot 4H_2O$, $Ni$-$C_2O_2 \cdot 2H_2O$, $Ni(NO_3)_2 \cdot 6H_2O$, $NiSO_4$, $NiSO_4 \cdot 6H_2O$, nickel halide, or a combination thereof.

The cobalt-containing raw material may be, for example, $CoSO_4$, $Co(OCOCH_3)_2 \cdot 4H_2O$, $Co(NO_3)_2 \cdot 6H_2O$, $CoSO_4 \cdot 7H_2O$, or a combination thereof.

The manganese-containing raw material may be, for example, $Mn_2O_3$, $MnO_2$, $Mn_3O_4$ $MnCO_3$, $Mn(NO_3)_2$, $MnSO_4 \cdot H_2O$, manganese acetate, manganese halide, or a combination thereof.

The Q metal-containing raw material may be an aluminum-containing raw material, and, for example, may be $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$, aluminum halide, or a combination thereof. However, Al is allowed to be added together with a lithium source in a firing step which will be described later without being added to the aqueous transition metal solution. In addition, the Q metal-containing raw material may be acetate, carbonate, nitrate, sulfate, halide, sulfide, or oxide of Q metal.

An input amount of each of the transition metal-containing raw materials may be determined in consideration of a molar ratio of the transition metal in the positive electrode active material to be finally produced.

Meanwhile, the ammonium cation complex forming agent may include at least one compound selected from the group consisting of $NH_4OH$, $(NH_4)_2SO_4$, $NH_4NO_3$, $NH_4Cl$, $CH_3COONH_4$, and $(NH_4)_2CO_3$, and may be put into a reactor in the form of a solution in which the compound is dissolved in a solvent. In this case, as the solvent, water, or a mixture of an organic solvent (specifically, alcohol, and the like) that may be uniformly mixed with water and water may be used.

The basic compound may be at least one compound selected from the group consisting of $NaOH$, $KOH$, and $Ca(OH)_2$, and may be put into a reactor in the form of a solution in which the compound is dissolved in a solvent. In this case, as the solvent, water, or a mixture of an organic solvent (specifically, alcohol, and the like) that may be uniformly mixed with water and water may be used.

As described above, when the aqueous transition metal solution, the ammonium cation complex forming agent, and the basic compound are put into a reactor and stirred, transition metals in the aqueous transition metal solution are coprecipitated to generate transition metal hydroxide-type precursor particles.

In this case, the aqueous transition metal solution, the ammonium cation complex forming agent, and the basic compound are added in an amount such that the pH of the reaction solution is within a desired range.

When the precursor particles are formed through the method described above, the particles are separated from the reaction solution to obtain a transition metal precursor. For example, the reaction solution may be filtered to separate a transition metal precursor from the reaction solution, and then the separated transition metal precursor may be washed and dried to obtain a transition metal precursor. In this case, as needed, a process such as grinding and/or classification may be performed.

The transition metal precursor obtained in this way is mixed with a lithium source and then fired to prepare a lithium transition metal oxide. In this case, the Q metal-containing raw material may be mixed together and fired, if necessary.

As the lithium source, lithium-containing sulfate, nitrate, acetate, carbonate, oxalate, citrate, halide, hydroxide, or oxyhydroxide may be used, and for example, $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$,

$Li_2O$, $Li_2SO_4$, $CH_3COOLi$, $Li_3C_6H_5O_7$, or a mixture thereof may be used.

Meanwhile, in an embodiment of the present invention, the preparing of the fired body may involve mixing the precursor and the lithium source so that Li/M, which is a molar ratio of lithium in the lithium source to the total metal elements of the precursor, is 1.01 to 1.09, preferably 1.01 to 1.06, and more preferably 1.02 to 1.05. When Li/M is 1.01 or greater, it is desirable because structural completion increases. However, when an excessive amount of lithium by-products remain on the surface, the lithium by-products may act as a resistor and the amount of gas generated from the residual lithium may increase, and thus the range of 1.09 or less is preferable.

In an embodiment of the present invention, the firing in the preparing of the fired body may be performed in an oxygen atmosphere at 700 °C to 900 °C, preferably at 800 °C to 900 °C for 8 to 12 hours. When the firing temperature and time are in the above range, it is desirable since structural stability is obtained through sufficient reaction and also optimal electrochemical properties are achieved.

**b) Preparing lithium transition metal oxide**

The method for preparing a positive electrode active material includes washing the fired body with a washing solution in an amount of 30 parts by weight to 70 parts by weight with respect to 100 parts by weight of the fired body to prepare a lithium transition metal oxide.

In the present invention, in the water washing process, the amount of the washing solution with respect to 100 parts by weight of the fired body is set to be 35 parts by weight to 60 parts by weight, preferably 40 parts by weight to 50 parts by weight to promote optimal washing effects in terms of surface properties and residual lithium amount. Specifically, when the amount of the washing solution with respect to 100 parts by weight of the fired body is less than 30 parts by weight, an excessive amount of residual lithium by-products remain on the particle surface, causing increased side reactions and slurry gelation due to the excess amount of lithium by-products described above, and when the amount of the washing solution is greater than 70 parts by weight, the surface is damaged due to excessive washing.

The washing solution may be water or a mixture of water and additives, and preferably may be water. As the washing solution additive, LiOH capable of replenishing lithium ions lost during the washing process, and/or NaOH capable of producing a flux effect, may be used, but the embodiment of the present invention is not limited thereto.

In an embodiment of the present invention, the washing in the preparing of the lithium transition metal oxide may be performed by placing the fired body in water and stirring the mixture at a temperature of 15 °C to 25 °C for 1 minute to 20 minutes at a rate of 1,500 rpm to 2,500 rpm.

Specifically, the water washing may be performed by stirring the fired body with water using a magnetic bar in a stirrer, and the temperature during the stirring may be 15 °C to 25 °C, preferably 15 °C to 20 °C, and the stirring rate may be 1,500 rpm to 2,500 rpm, preferably 1,500 rpm to 2,000 rpm.

After the water washing, drying may be performed at a temperature of 130 °C to 150 °C for 12 to 24 hours, but is not limited thereto.

**Positive electrode active material**

Next, a positive electrode active material according to the present invention will be described. The positive electrode active material according to the present invention may be prepared according to the preparation method of the present invention described above, and each component may refer to the description of the preparation method described above.

The positive electrode active material according to the present invention includes a lithium transition metal oxide having a nickel content of 70 mol% or greater with respect to all metals excluding lithium, and EELS analysis results of a particle surface of the positive electrode active material satisfy Equation 1 below.

[Equation 1]

$$0.85 \le I(854 \text{ eV})/I(855.5 \text{ eV}) < 1$$

In Equation 1 above,

I (854 eV) indicates a peak intensity observed around 854 eV, and
I (855.5 eV) indicates a peak intensity observed around 855.5 eV.

In the EELS analysis results, $Ni^{2+}$ is observed around 854 eV and $Ni^{3+}$ is observed around 855.5 eV, and accordingly, amounts of the $Ni^{2+}$ and $Ni^{3+}$ may be compared by comparing the intensity of each peak. That is, Equation 1

above indicates that $Ni^{3+}$ is present in a greater amount on the particle surface of the positive electrode active material according to the present invention than $Ni^{2+}$.

Meanwhile, as the surface deterioration caused by washing worsens, an NiO phase is formed with changes from a layered structure to a rock salt structure, and thus $Ni^{2+}$ increases and an oxidation value of Ni is shown to be low, and as described above, the positive electrode active material according to the present invention has the effect of reducing surface damage caused by washing, and thus has less deterioration, having a I(854 eV)/I(855.5 eV) value of less than 1 as in Equation 1 above. However, when the I(854 eV)/I(855.5 eV) value is less than 0.85, lithium compounds remaining on the particle surface not only act as resistors, but also accelerate battery deterioration due to side reactions with an electrolyte, and this is not desirable in terms of resistance and lifetime characteristics.

Specifically, the I(854 eV)/I(855.5 eV) value may be 0.88 or more, more specifically 0.90 or greater, and may be 0.99 or less, or 0.95 or less.

In an embodiment of the present invention, a molar ratio of lithium to all metal elements excluding lithium in the lithium transition metal oxide may be 1.01 to 1.09, preferably 1.01 to 1.06, and more preferably 1.02 to 1.05.

In an embodiment of the present invention, the lithium transition metal oxide may be a lithium transition metal oxide containing nickel, cobalt, and manganese and a nickel content of 70 mol% or greater with respect to the total moles of all transition metals. When the amount of nickel satisfies the above range, high capacity may be achieved.

Specifically, the lithium transition metal oxide may be represented by Formula 1 below.

[Formula 1] $\qquad Li_aNi_bCo_cMn_dQ_eO_{2+f}$

In Formula 1 above,

a, b, c, d, e, and f satisfy $1.01 \leq a \leq 1.09$, $0.7 \leq b < 1.0$, $0 < c < 0.3$, $0 < d < 0.3$, $0 \leq e \leq 0.1$, $b+c+d+e = 1$, and $-0.1 \leq f \leq 1.0$, respectively, and

Q is at least one selected from the group consisting of Al, Mg, V, Ti, Zr, W, Cu, Fe, Cr, Zn, In, Ta, Y, La, Sr, Ga, Sc, Gd, Sm, Ca, Ce, Nb, Mg, B, and Mo.

Preferably, a in Formula 1 above may be 1.01 to 1.06, more preferably 1.02 to 1.05.

In an embodiment of the present invention, b, c, d, and e in Formula 1 above may satisfy $0.7 \leq b < 1.0$, $0 < c \leq 0.15$, $0 < d \leq 0.25$, and $0 \leq e \leq 0.05$, respectively, and may more preferably satisfy $0.7 \leq b < 1.0$, $0 < c \leq 0.1$, $0 < d \leq 0.2$, and $0 \leq e \leq 0.03$, respectively.

In an embodiment of the present invention, the positive electrode active material is in the form of secondary particles in which a plurality of primary particles are aggregated, and may have a $D_{50}$ of 8 μm to 15 μm, preferably 9 μm to 15 μm, and more preferably 9 μm to 12 μm. It is desirable that $D_{50}$ is 8 μm or greater in terms of increasing rolling density, but when the particle size is too large, when rolling, current collector foil may be pierced, which may lead to electrode disconnection, and thus it is desirable not to be greater than 15 μm.

**Positive electrode**

Next, a positive electrode according to the present invention will be described.

The positive electrode according to the present invention includes the positive electrode active material. Specifically, the positive electrode includes a positive electrode current collector, and a positive electrode active material layer provided on the positive electrode current collector and including the positive electrode active material.

In the positive electrode, the positive electrode collector is not particularly limited as long as it has conductivity without causing chemical changes in batteries. For example, stainless steel, aluminum, nickel, titanium, fired carbon, or aluminum or stainless steel that is surface-treated with one of carbon, nickel, titanium, silver, and the like may be used. In addition, the positive electrode current collector may typically have a thickness of 3 to 500 μm, and fine irregularities may be formed on a surface of the positive electrode current collector to improve adhesion of the positive electrode active material. For example, the positive electrode current collector may be used in various forms such as a film, a sheet, a foil, a net, a porous body, a foam body, and a non-woven fabric body.

The positive electrode active material layer may include a conductive material and a binder, together with the positive electrode active material.

The conductive material is used to impart conductivity to an electrode, and any conductive material may be used without particular limitation as long as it has electron conductivity without causing chemical changes in batteries to be constituted. Specific examples thereof may include graphite such as natural graphite or artificial graphite; carbon black such as acetylene black, Ketjen black, channel black, furnace black, lamp black, and thermal black; carbon-based material such as carbon fibers and carbon nanotubes; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may typically be included in an amount of 1 wt% to 30 wt%, preferably 1 wt% to 20 wt%, more preferably 1 wt% to 10 wt%, with respect to a total weight of the positive electrode active material layer.

The binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber(EPDM rubber), a sulfonated EPDM, styrene-butadiene rubber (SBR), fluorine rubber, or various copolymers thereof, and any one thereof or a mixture of two or more thereof may be used. The binder may be included in an amount of 1 wt% to 30 wt%, preferably 1 wt% to 20 wt%, more preferably 1 wt% to 10 wt%, with respect to the total weight of the positive electrode active material layer.

The positive electrode may be prepared according to a typical method for preparing a positive electrode. For example, the positive electrode active material, the binder, and/or the conductive material may be mixed in a solvent to prepare a positive electrode slurry, and the positive electrode slurry may be applied onto the positive electrode current collector, and then dried and rolled to prepare the positive electrode. In this case, types and amounts of the positive electrode active material, the binder, and the conductive material are as described above.

The solvent may be a solvent commonly used in the art, and may be dimethyl sulfoxide (DMSO), isopropyl alcohol, N-methylpyrrolidone (NMP), acetone, water, or the like, and any one thereof or a mixture of two or more thereof may be used. The amount of the solvent to be used is sufficient if the solvent may dissolve or disperse the positive electrode active material, the conductive material, and the binder in consideration of the applying thickness of a slurry and preparation yield, and thereafter, have a viscosity which may exhibit excellent thickness uniformity during application for the preparation of a positive electrode.

In another method, the positive electrode may be prepared by casting the positive electrode slurry on a separate support and then laminating a film separated from the support on the positive electrode current collector.

## Lithium secondary battery

Next, a lithium secondary battery according to the present invention will be described.

The lithium secondary battery according to the present invention includes the positive electrode, a negative electrode containing a negative electrode active material, a separator disposed between the positive electrode and the negative electrode, and an electrolyte. In addition, the lithium secondary battery may selectively further include a battery case for accommodating an electrode assembly composed of the positive electrode, the negative electrode, and the separator, and a sealing member for sealing the battery case.

The negative electrode includes a negative electrode current collector, and a negative electrode active material layer provided on the negative electrode current collector and including the negative electrode active material.

The negative electrode current collector is not particularly limited as long as it has a high conductivity without causing a chemical change in a battery. For example, copper, stainless steel, aluminum, nickel, titanium, baked carbon, copper or stainless steel that is surface-treated with one of carbon, nickel, titanium, silver, and the like, an aluminum-cadmium alloy, and the like may be used. Also, the negative electrode current collector may typically have a thickness of 3 to 500 $\mu$m, and as in the case of the positive electrode current collector, fine irregularities may be formed on the surface of the negative electrode current collector to improve the adhesion of a negative electrode active material. For example, the negative electrode current collector may be used in various forms such as a film, a sheet, a foil, a net, a porous body, a foam body, and a non-woven fabric body.

The negative electrode active material layer optionally includes a binder and a conductive material in addition to the negative electrode active material.

A compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic substance alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as $SiO_\beta$ ($0<\beta<2$), $SnO_2$, a vanadium oxide, and a lithium vanadium oxide; or a composite including the metallic substance and the carbonaceous material such as an Si-C composite or an Sn-C composite, and any one thereof or a mixture of two or more thereof may be used.

In addition, a metallic lithium thin film may be used as the negative electrode active material. In addition, as a carbon material, low-crystalline carbon, high-crystalline carbon, and the like may all be used. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. Preferably, the negative electrode active material may be graphite, SiO, or a mixture thereof.

The conductive material is used to impart conductivity to an electrode, and any conductive material may be used without particular limitation as long as it has electron conductivity without causing chemical changes in batteries to be constituted. Specific examples thereof may include graphite such as natural graphite or artificial graphite; carbon black such as acetylene black, Ketjen black, channel black, furnace black, lamp black, and thermal black; carbon-based material such as carbon fibers and carbon nanotubes; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may typically be included in an amount of 1 wt% to 30 wt%, preferably 1 wt% to 20 wt%, more preferably 1 wt% to 10 wt%, with respect to a total weight of the negative electrode active material layer.

The binder serves to improve the bonding between negative electrode active material particles and the adhesion between the negative electrode active material and the negative electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber(EPDM rubber), a sulfonated EPDM, styrene-butadiene rubber (SBR), fluorine rubber, or various copolymers thereof, and any one thereof or a mixture of two or more thereof may be used. The binder may be included in an amount of 1 wt% to 30 wt%, preferably 1 wt% to 20 wt%, more preferably 1 wt% to 10 wt%, with respect to the total weight of the negative electrode active material layer.

The negative electrode active material layer may be prepared, for example, in a way that a negative electrode slurry containing a negative electrode active material and optionally a binder and a conductive material is applied onto a negative electrode current collector or a separate support is cast with the negative electrode slurry, and then a film obtained by peeling from the support is laminated on the negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. In addition, a coated separator including a ceramic component or a polymer material may be used to secure heat resistance or mechanical strength, and may be optionally used in a single-layered or a multi-layered structure.

Meanwhile, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

Any compound may be used as the lithium salt without particular limitation as long as it may provide lithium ions used in a lithium secondary battery. Specifically, as the lithium salt, $LiPF_6$, $LiClO_4$, $LiAsF_6$, $LiBF_4$, $LiSbF_6$, $LiAlO_2$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, $LiB(C_2O_4)_2$, or the like may be used. The lithium salt may be used in a concentration range of 0.1 M to 5.0 M, preferably 0.1 M to 3.0 M. When the concentration of the lithium salt is in the above range, the electrolyte has suitable conductivity and viscosity, thereby exhibiting excellent performance, and lithium ions may effectively move.

In addition to the electrolyte constituents, the electrolyte may further include additives for improving life characteristics of a battery, preventing reduction in battery capacity, and increasing battery discharge capacity. For example, as the additive, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be used alone or in a mixture thereof, but the present invention is not limited thereto. The additive may be included in an amount of 0.1 wt% to 10 wt%, preferably 0.1 wt% to 5 wt%, with respect to a total weight of the electrolyte.

The lithium secondary battery including the positive electrode active material according to the present invention as describe above stably exhibits excellent discharging capacity, output properties, and capacity retention, and thus, are useful for portable devices such as a mobile phone, a notebook computer, and a digital camera, and in the field of electric cars such as a hybrid electric vehicle (HEV).

Accordingly, according to another embodiment of the present invention, a battery module including the lithium secondary battery as a unit cell, and a battery pack including the same are provided.

The battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

Hereinafter, examples of the present invention will be described in detail in such a manner that it may easily be performed by a person skilled in the art to which the present invention pertains.

## [Examples and Comparative Examples: Preparation of positive electrode active material]

### Example 1.

An $Ni_{0.7}Co_{0.1}Mn_{0.2}(OH)_2$ precursor was mixed with LiOH so that a molar ratio of Li/M (Ni+Co+Mn) was 1.03, and the mixture was heat treated at 870 °C for 10 hours in an oxygen atmosphere to prepare a fired body. Thereafter, 70 g of the prepared fired body was placed in a beaker containing 30 g of water, placed on a stirrer, stirred at 15 °C for 10 minutes at 2,000 rpm to perform washing. After the washing, a lithium transition metal oxide having a composition of $Li_{1.03}[Ni_{0.7}Co_{0.1}Mn_{0.2}]O_2$ was prepared through vacuum drying at 130 °C for 24 hours. The prepared lithium transition metal oxide was used as a positive electrode active material and had a $D_{50}$ of 10 $\mu$m.

### Comparative Example 1.

An $Ni_{0.7}Co_{0.1}Mn_{0.2}(OH)_2$ precursor was mixed with LiOH so that a molar ratio of Li/M (Ni+Co+Mn) was 1.10, and the mixture was heat treated at 870 °C for 10 hours in an oxygen atmosphere to prepare a fired body. Thereafter, 70 g of the prepared fired body was placed in a beaker containing 30 g of water, placed on a stirrer, stirred at 15 °C for 5 minutes at 2,000 rpm to perform washing. After the washing, a lithium transition metal oxide having a composition of $Li_{1.10}[Ni_{0.7}Co_{0.1}Mn_{0.2}]O_2$ was prepared through vacuum drying at 130 °C for 24 hours. The prepared lithium transition metal oxide was used as a positive electrode active material and had a $D_{50}$ of 10 $\mu$m.

### Comparative Example 2.

An $Ni_{0.7}Co_{0.1}Mn_{0.2}(OH)_2$ precursor was mixed with LiOH so that a molar ratio of Li/M (Ni+Co+Mn) was 1.03, and the mixture was heat treated at 870 °C for 10 hours in an oxygen atmosphere to prepare a fired body. Thereafter, 50 g of the prepared fired body was placed in a beaker containing 50 g of water, placed on a stirrer, stirred at 15 °C for 10 minutes at 2,000 rpm to perform washing. After the washing, a lithium transition metal oxide having a composition of $Li_{1.03}[Ni_{0.7}Co_{0.1}Mn_{0.2}]O_2$ was prepared through vacuum drying at 130 °C for 24 hours. The prepared lithium transition metal oxide was used as a positive electrode active material and had a $D_{50}$ of 10 $\mu$m.

## [Experimental Example: EELS analysis and performance evaluation]

### Experimental Example 1. EELS analysis

For each of the positive electrode active materials prepared in Examples and Comparative Examples above, spectra were obtained through analysis from a particle surface up to 100 nm in EELS mode using TEM equipment (FEI Ttitan G2 80-200 ChemiSTEM), and the results are shown in FIG. 1. Peak intensity observed at 854 eV and 855.5 eV in the corresponding spectrum was determined, and then I(854 eV)/I(855.5 eV) was calculated and shown in Table 1 below.

**Experimental Example 2. Resistance and lifetime evaluation**

(1) Manufacture of half cells

The positive electrode active materials each prepared in Examples and Comparative Examples above, a conductive material (carbon black), and a binder (PVdF) were mixed in N-methylpyrrolidone at a weight ratio of 96:2:2 to prepare a positive electrode slurry. The positive electrode slurry was applied onto one surface of an aluminum current collector, dried at 100 °C, and then rolled to prepare a positive electrode.

A polyethylene separator was interposed between the positive electrode and a lithium metal negative electrode to prepare an electrode assembly, and the electrode assembly was placed inside a battery case. Thereafter, an electrolyte solution was injected into the case to manufacture a half cell. The electrolyte solution was prepared by dissolving $LiPF_6$ at a concentration of 1 M in an organic solvent in which ethylene carbonate, dimethyl carbonate, and diethyl carbonate were mixed in a volume ratio of 3:4:3.

(2) Measuring initial resistance

A formation process was performed on each of the manufactured half-cells, and then the half-cells were charged up to 4.3 V at 0.33 C rate at 25 °C in constant current-constant voltage conditions using PNE-0506 charger/discharger (manufacturer: PNE Solution Co., Ltd.), and discharged at 0.33 C to set SOC to 50%, and then subjected to a discharge pulse for 10 seconds at a constant current of 2.5 C to measure voltage drop therefrom, thereby obtaining an initial resistance value. The measurement is shown in Table 1 below.

(3) Measuring lifetime

Charging/discharging in which each of the half cells manufactured above was charged (0.05 C cut off) up to 4.3 V at 1 C rate at 45 °C in constant current-constant voltage conditions, and discharged up to 3.0 V at 1 C rate in constant current (CC) conditions was set as one cycle, and the cycle was repeated 100 times to measure capacity retention through Equation below. The measurement results are shown in Table 1 below.

Capacity retention (%) = { (discharge capacity after 100th cycle)/(discharge capacity after 1st cycle)} $\times$ 100

(4) Measuring gas

Each of the half cells manufactured above was charged up to 4.3 V at 0.1 C rate in CCCV mode (end of charge current: 1/20 C). After charging, the cells were disassembled to obtain two charged positive electrodes and two polyethylene separators, and then the positive electrodes and the separators were alternately stacked on a bottom plate of a coin cell, an electrolyte was injected, and the coin cell was reassembled. Thereafter, an amount of gas generated from storage at 70 °C for 4 weeks was measured using a gas chromatograph-mass spectrometer (GC-MS).

[Table 1]

| | Experimental Example 1 | Experimental Example 2 | | |
|---|---|---|---|---|
| | I (854 eV) /I (855.5 eV) | Initial resistance ($\Omega$) | Capacity retention (%) | Amount of gas generation ($\mu$L) |
| Example 1 | 0.91 | 1. 43 | 94.6 | 98 |
| Comparative Example 1 | 0.84 | 1.54 | 92.8 | 146 |
| Comparative Example 2 | 1.05 | 1.7 | 88.9 | 105 |

The results in Table 1 above show that the use of the positive electrode active material satisfy Equation 1 above is effective in lowering initial resistance and improving lifetime while reducing gas generation.

Meanwhile, in Comparative Example 1, an excessive amount of lithium source was added, resulting in a significant amount of residual lithium on the surface, but since the washing process was shorter than in Example 1, there was less surface damage, indicating a smaller amount of $Ni^{2+}$ than $Ni^{3+}$, thereby exhibiting a I(854 eV)/I(855.5 eV) value of less than 0.85. Accordingly, lithium compounds remaining on the particle surface not only act as resistors, but also cause side reactions with an electrolyte, and this results in degraded initial resistance and lifetime characteristics, and significantly increased gas generation.

Meanwhile, Comparative Example 2 washing with 100 parts by weight of washing solution with respect to 100 parts by weight of the fired body in the preparation was found to exhibit worsened surface damage due to excessive washing. This results in a reduced Ni oxidation value, leading to reduced performance in initial resistance, lifetime, and gas generation compared to Example 1.

**Claims**

1. A positive electrode active material comprising:
   a lithium transition metal oxide having a nickel content of 70 mol% or greater with respect to all metals excluding lithium,

   wherein EELS analysis results of a particle surface of the positive electrode active material satisfy Equation 1 below:

$$[\text{Equation 1}]$$

$$0.85 \leq I(854\ eV)/I(855.5\ eV) < 1$$

   wherein in Equation 1 above,
   I (854 eV) indicates a peak intensity observed around 854 eV, and
   I (855.5 eV) indicates a peak intensity observed around 855.5 eV.

2. The positive electrode active material of claim 1, wherein a molar ratio of lithium to all metal elements excluding lithium in the lithium transition metal oxide is 1.01 to 1.09.

3. The positive electrode active material of claim 1, wherein the lithium transition metal oxide is represented by Formula 1 below:

   [Formula 1]     $Li_aNi_bCo_cMn_dQ_eO_{2+f}$

   wherein in Formula 1 above,
   a, b, c, d, e, and f satisfy $1.03 \leq a \leq 1.09$, $0.7 \leq b < 1.0$, $0 < c < 0.3$, $0 < d < 0.3$, $0 \leq e \leq 0.1$, b+c+d+e=1, and $-0.1 \leq f \leq 1.0$, respectively, and
   Q is at least one selected from the group consisting of Al, Mg, V, Ti, Zr, W, Cu, Fe, Cr, Zn, In, Ta, Y, La, Sr, Ga, Sc, Gd, Sm, Ca, Ce, Nb, Mg, B, and Mo.

4. The positive electrode active material of claim 1, wherein the positive electrode active material has a $D_{50}$ of 8 μm to 15 μm.

5. A method for preparing a positive electrode active material of claim 1, comprising:

   mixing a precursor having a nickel content of 70 mol% or greater with respect to the total moles of transition metal and a lithium source and firing the mixture to prepare a fired body; and
   washing the fired body with a washing solution in an amount of 30 parts by weight to 70 parts by weight with respect to 100 parts by weight of the fired body to prepare a lithium transition metal oxide.

6. The method of claim 5, wherein the preparing of the fired body involves mixing the precursor and the lithium source so that Li/M, which is a molar ratio of lithium in the lithium source to the total metal elements of the precursor, is 1.01 to 1.09.

7. The method of claim 5, wherein the washing in the preparing of the lithium transition metal oxide is performed by placing the fired body in water and stirring the mixture at a temperature of 15 °C to 25 °C for 1 minute to 20 minutes at a rate of 1,500 rpm to 2,500 rpm.

8. The method of claim 5, wherein the firing in the preparing of the fired body is performed at a temperature of 700 °C to 900 °C.

9. A positive electrode comprising the positive electrode active material of claim 1.

10. A lithium secondary battery comprising the positive electrode of claim 9; a negative electrode containing a negative electrode active material; a separator disposed between the positive electrode and the negative electrode; and an electrolyte.

FIG. 1

## INTERNATIONAL SEARCH REPORT

| | International application No. |
|---|---|
| | **PCT/KR2024/013837** |

### A. CLASSIFICATION OF SUBJECT MATTER

**H01M 4/36**(2006.01)i; **H01M 4/525**(2010.01)i; **C01G 53/00**(2006.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); H01M 10/052(2010.01); H01M 4/485(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극 활물질(cathode active material), 니켈(nickel), 수세(washing), 입자 표면(particle surface), 전자에너지 손실 분광법(Electron Energy-Loss Spectroscopy; EELS), 잔류 리튬(residual lithium)

### C. DOCUMENTS CONSIDERED TO BE RELEVANT

| Category* | Citation of document, with indication, where appropriate, of the relevant passages | Relevant to claim No. |
|---|---|---|
| Y | KR 10-2023-0076480 A (LG ENERGY SOLUTION, LTD.) 31 May 2023 (2023-05-31)<br>See claims 1 and 7; paragraphs [0093], [0140]-[0142], [0148], [0158], [0162] and [0163]; and table 1. | 1-10 |
| Y | KR 10-2023-0038123 A (LG ENERGY SOLUTION, LTD.) 17 March 2023 (2023-03-17)<br>See claims 1, 3, 9 and 12; and paragraphs [0017], [0018] and [0118]. | 1-10 |
| Y | KR 10-2199867 B1 (ECOPRO EM CO., LTD.) 08 January 2021 (2021-01-08)<br>See paragraphs [0071] and [0078]-[0080]. | 4 |
| A | KR 10-2018-0025030 A (DONG-A UNIVERSITY RESEARCH FOUNDATION FOR INDUSTRY-ACADEMY COOPERATION) 08 March 2018 (2018-03-08)<br>See abstract; and claims 1-8. | 1-10 |
| A | KR 10-2019-0132306 A (ECOPRO BM CO., LTD.) 27 November 2019 (2019-11-27)<br>See abstract; and claims 1-8. | 1-10 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 December 2024** | **24 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 760 807 A1

**INTERNATIONAL SEARCH REPORT**
Information on patent family members

| International application No. |
|---|
| **PCT/KR2024/013837** |

| Patent document cited in search report | | | Publication date (day/month/year) | Patent family member(s) | | | Publication date (day/month/year) |
|---|---|---|---|---|---|---|---|
| KR | 10-2023-0076480 | A | 31 May 2023 | CA | 3221424 | A1 | 01 June 2023 |
| | | | | CN | 117529452 | A | 06 February 2024 |
| | | | | EP | 4342851 | A1 | 27 March 2024 |
| | | | | EP | 4342851 | A4 | 21 August 2024 |
| | | | | JP | 2024-520714 | A | 24 May 2024 |
| | | | | JP | 7595793 | B2 | 06 December 2024 |
| | | | | KR | 10-2732918 | B1 | 25 November 2024 |
| | | | | US | 2024-0270603 | A1 | 15 August 2024 |
| | | | | WO | 2023-096201 | A1 | 01 June 2023 |
| KR | 10-2023-0038123 | A | 17 March 2023 | CN | 117916202 | A | 19 April 2024 |
| | | | | CN | 117941095 | A | 26 April 2024 |
| | | | | EP | 4379857 | A1 | 05 June 2024 |
| | | | | EP | 4382487 | A1 | 12 June 2024 |
| | | | | JP | 2024-531572 | A | 29 August 2024 |
| | | | | JP | 2024-531582 | A | 29 August 2024 |
| | | | | KR | 10-2023-0038124 | A | 17 March 2023 |
| | | | | US | 2023-0083736 | A1 | 16 March 2023 |
| | | | | US | 2024-0351914 | A1 | 24 October 2024 |
| | | | | WO | 2023-038469 | A1 | 16 March 2023 |
| | | | | WO | 2023-038473 | A1 | 16 March 2023 |
| KR | 10-2199867 | B1 | 08 January 2021 | None | | | |
| KR | 10-2018-0025030 | A | 08 March 2018 | None | | | |
| KR | 10-2019-0132306 | A | 27 November 2019 | CN | 107210437 | A | 26 September 2017 |
| | | | | CN | 107210437 | B | 19 November 2021 |
| | | | | CN | 113991119 | A | 28 January 2022 |
| | | | | EP | 3242350 | A1 | 08 November 2017 |
| | | | | JP | 2018-506141 | A | 01 March 2018 |
| | | | | JP | 2020-184549 | A | 12 November 2020 |
| | | | | JP | 2022-191312 | A | 27 December 2022 |
| | | | | JP | 7433162 | B2 | 19 February 2024 |
| | | | | KR | 10-2016-0081545 | A | 08 July 2016 |
| | | | | KR | 10-2020-0143658 | A | 24 December 2020 |
| | | | | KR | 10-2267160 | B1 | 21 June 2021 |
| | | | | KR | 10-2267160 | B9 | 12 November 2021 |
| | | | | US | 10483537 | B2 | 19 November 2019 |
| | | | | US | 2017-0294651 | A1 | 12 October 2017 |
| | | | | WO | 2016-108376 | A1 | 07 July 2016 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230123472
- KR 1020240123371